# EUROPÄISCHE PATENTANMELDUNG

(11) **EP 2 610 999 A2**
(43) Veröffentlichungstag der Anmeldung: **03.07.2013**
(21) Anmeldenummer: 12199093.1
(22) Anmeldetag: 21.12.2012
(51) Int. Cl.: H02J 15/00

(54) **Verfahren und Vorrichtung zur Nutzung elektrischer Energie einer an ein Hausstromnetz angeschlossenen Einrichtung zur Erzeugung erneuerbarer elektrischer Energie**

(30) Priorität: 29.12.2011 DE 102011090141
(71) Anmelder: Schmid, Werner, 73540 Heubach-Lautern (DE)
(72) Erfinder: Schmid, Werner, 73540 Heubach-Lautern (DE)
(74) Vertreter: Schmid, Wolfgang

(57) **Zusammenfassung**

Bei einem Verfahren zur Nutzung elektrischer Energie einer an ein Hausstromnetz (3) angeschlossenen Einrichtung (2) zur Erzeugung erneuerbarer elektrischer Energie, insbesondere einer Photovoltaikanlage (2a) und/oder einer Windkraftanlage, wird zumindest ein Teil der von der Einrichtung (2) zur Erzeugung erneuerbarer elektrischer Energie erzeugte elektrische Energie als elektrischer Strom mehreren an dem Hausstromnetz (3) angeschlossenen Verbrauchern (11,12,13,14) zugeführt und von den Verbrauchern (11,12,13,14) verbraucht. Die von den Verbrauchern (11,12,13,14) nicht verbrauchte, überschüssige elektrische Energie wird einer Heizeinrichtung (19) zugeführt, um ein Wärmespeichermedium zu erwärmen. Die Differenz zwischen der von der Einrichtung (2) zur Erzeugung erneuerbarer elektrischer Energie erzeugten elektrischen Energie und der von den an dem Hausstromnetz (3) angeschlossenen Verbrauchern (11,12,13,14) ohne die Heizeinrichtung (19) verbrauchten elektrischen Energie wird gemessen.

## Beschreibung

Die Erfindung betrifft ein Verfahren zur Nutzung elektrischer Energie einer an ein Hausstromnetz angeschlossenen Einrichtung zur Erzeugung erneuerbarer elektrischer Energie, insbesondere einer Photovoltaikanlage und/oder einer Windkraftanlage, nach der im Oberbegriff von Anspruch 1 näher definierten Art. Des Weiteren betrifft die Erfindung eine Vorrichtung zur Durchführung des Verfahrens.

Aus dem allgemeinen Stand der Technik sind die verschiedensten Verfahren zum Betreiben von Einrichtungen zur Erzeugung erneuerbarer elektrischer Energie, insbesondere von Photovoltaikanlagen, bekannt. Während netzgekoppelte Photovoltaikanlagen ursprünglich so konzipiert waren, dass sie den gesamten von ihnen erzeugten Strom ins öffentliche Stromnetz eingespeist haben, werden in jüngster Zeit vermehrt Anstrengungen unternommen, den von den Photovoltaikanlagen erzeugten Strom in dem Hausstromnetz zu nutzen, an dem die Photovoltaikanlage angeschlossen ist. Gründe hierfür sind neben dem Ziel, regenerative Energie möglichst am Erzeugungsort zu nutzen auch die rückläufigen Einspeisevergütungen, die das Nutzen von eigen erzeugtem Strom aus Einrichtungen zur Erzeugung erneuerbarer elektrischer Energie, nachfolgend Eigenstromnutzung genannt, zunehmend wirtschaftlicher machen. Die rückläufigen Einspeisevergütungen führen in Folge auch zu weiter rückläufigen Marktpreisen für die Photovoltaikanlagen.

Im Zusammenhang mit der Nutzung von Eigenstrom und zur Realisierung einer hohen Eigenstromnutzungsquote sind allerdings eine Reihe von Problemfeldern zu berücksichtigen. Nachfolgend werden diese aufgelistet.

Problemfeld 1: Die Stromerzeugung durch Einrichtungen zur Erzeugung erneuerbarer elektrischer Energie weist im Tagesverlauf sehr häufig starke Schwankungen auf. Dies gilt insbesondere für Photovoltaikanlagen und Windkraftanlagen.

Problemfeld 2: Insbesondere Photovoltaikanlagen weisen typische Tagesgänge auf, welche parallel zur Einstrahlungsintensität der Sonne verlaufen.

Problemfeld 3: Insbesondere die Stromerzeugung durch Photovoltaikanlagen weist sehr starke Unterschiede zwischen einem Wintertag und einem Sommertag auf, da die Einstrahlung in Mitteleuropa zwischen Winter und Sommer etwa um den Faktor 10 variiert, d.h. an einem Sommertag kann die Einstrahlung und damit die Stromerzeugung beim 10-fachen oder darüber gegenüber einem Wintertag liegen.

Problemfeld 4: Aufgrund der inzwischen hohen Gesamtleistung der installierten Einrichtungen zur Erzeugung erneuerbarer elektrischer Energie ist in verschiedenen Ländern außerdem gesetzlich geregelt, dass die von diesen Anlagen, insbesondere Photovoltaikanlagen und Windkraftanlagen, erzeugte elektrischen Energie zeitweise gar nicht oder nur mit reduzierter Einspeiseleistung in das öffentliche Stromnetz eingespeist werden darf, um Überlastungen des Stromnetzes zu vermeiden. Dies lässt sich bei Ein- oder Zweifamilienhäusern und anderen Gebäuden grundsätzlich dadurch verwirklichen, dass insbesondere während der Sommermonate tagsüber der gesamte im Haushalt oder Unternehmen anfallende Strombedarf durch die Photovoltaikanlage gedeckt werden kann bzw. dadurch, dass eine Einrichtung zur Regelung oder Begrenzung der Einspeiseleistung eingebaut wird. Der Einbau einer Einrichtung zur Regelung oder Begrenzung der Einspeiseleistung ist allerdings mit dem Verlust von Energie verbunden, da der gewünschte Effekt in der Regel nur durch eine Abregelung oder eine vollständige Abschaltung der Einrichtungen zur Erzeugung erneuerbarer elektrischer Energie erzielt werden kann.

Problemfeld 5: Der Realisierung einer hohen Eigenstromnutzungsquote und einer Stromversorgung ohne zusätzlich starke Inanspruchnahme von Strom aus dem öffentlichen Netz steht auch entgegen, dass der tägliche Strombedarf eines Haushalts, Betriebs oder Unternehmens während des Jahres in der Regel relativ konstant ist. Im Gegensatz zum etwa zehnfach höheren Energieangebot an einem Sommertag gegenüber einem Wintertag durch eine Photovoltaikanlage ist der Stromverbrauch eines Haushalts an einem Wintertag sogar meist höher als an einem Sommertag. Energieangebot durch die Photovoltaikanlage und Bedarf durch den Haushalt weisen daher im Jahreslauf tendenziell gegenläufige Kennlinien auf.

Problemfeld 6: Der Realisierung einer hohen Eigenstromnutzungsquote und einer Stromversorgung ohne zusätzlich starke Inanspruchnahme von Strom aus dem öffentlichen Netz steht darüber hinaus entgegen, dass der Strombedarf eines Haushalts während des Tages häufig abrupten und starken Schwankungen im Leistungsbedarf an elektrischer Energie unterliegt. Der Grund dafür liegt darin, dass viele häusliche Verbraucher stark schwankende Lastgänge mit abrupten Lastwechseln aufweisen können. So benötigt beispielsweise eine Waschmaschine während eines Waschvorgangs wechselnd unterschiedlich hohe elektrische Leistung, ausgelöst durch das Zu- oder Abschalten verschiedener, während des Waschvorgangs benötigter Komponenten, wie Motor oder Heizstab. Insbesondere das Ein- und Ausschalten des Heizstabes führt dabei zu abrupten und sehr starken Änderungen des Leistungsbedarfs des Geräts. Ähnliches gilt für viele Geräte im Bereich Waschen, Spülen, Kochen und Trocknen sowie für weitere Geräte.

Problemfeld 7: Ein weiteres Problem beim Betreiben von Photovoltaikanlagen bzw. allgemein von Einrichtungen zur Erzeugung erneuerbarer elektrischer Energie besteht darin, dass die so genannte Einspeisevergütung, also der Betrag, den der Betreiber der Photovoltaikanlage oder der Windkraftanlage erhält, wenn er den von derselben erzeugten Strom in das öffentliche Stromnetz einspeist, in den letzten Jahren immer mehr zurückgegangen ist und in Zukunft noch weiter zurückgehen wird. Dies kann in begrenztem Umfang entweder durch die eigene Nutzung des von der Photovoltaikanlage erzeugten Stroms oder durch Speicherung des Stroms in geeigneten Stromspeichereinrichtungen, wie zum Beispiel Batteriespeicher, umgangen werden. Solche Batteriespeicher sind jedoch relativ teuer und haben einen schlechten Wirkungsgrad, so dass dies zumindest derzeit noch keine wirtschaftliche Option darstellt.

Die Erzeugung von elektrischer Energie durch Einrichtungen zur Erzeugung erneuerbarer elektrischer Energie sowie die Stromeigennutzung ist also seit Jahren in der Praxis eingeführt. Darüber hinaus gibt es zwischenzeitlich Verfahren und Einrichtungen, die eine Erhöhung der Eigenstromnutzungsquote zum Ziel haben.

In der DE 20 2010 015 254 U1 wird vorgeschlagen, bestimmte Verbraucher zu bestimmten Zeiten einzuschalten, wenn eine besonders hohe Stromerzeugung durch die Photovoltaikanlage zu erwarten ist. Dabei wird versucht, die Höhe der eigen verbrauchten Energiemenge unter der Höhe der von der Photovoltaikanlage erzeugten Energiemenge zu halten. Dies lässt sich allerdings nur bis zu einem gewissen Grad realisieren, insbesondere da bestimmte Verbraucher zu bestimmten Zeiten eingeschaltet werden müssen und diese außerdem, entgegen der Darstellung in der DE 20 2010 015 254 U1, häufig keinen kontinuierlichen Energiebedarf aufweisen. Ziel des dort beschriebenen Verfahrens ist es, die Eigenverbrauchsquote auf über 60% zu steigern. Nachteilig für das dort beschriebene Verfahren kann sich auch auswirken, dass die Bereitstellung elektrischer Energie durch die Einrichtung zur Erzeugung erneuerbarer elektrischer Energie in Abhängigkeit der vorhandenen Einstrahlung während des Tagesverlaufs, auch innerhalb sehr kurzer Zeiträume, stark variieren kann. Ebenfalls nachteilig kann sich auswirken, dass der Strombedarf eines Haushalts während des Tages häufig abrupten und starken Schwankungen im Leistungsbedarf an elektrischer Energie unterliegt. Insbesondere die Tatsache, dass die Einstrahlung in Mitteleuropa im Sommer rund 10 mal höher liegt als im Winter, erschwert es mit einem solchen Lastmanagementsystem, eine hohe Eigenstromnutzungsquote ohne zusätzlich starke Inanspruchnahme von Strom aus dem öffentlichen Netz zu realisieren. In der DE 20 2010 015 254 U1 wird auch vorgeschlagen, Überschussstrom zur Warmwasserbereitung einzusetzen. Die zur Steuerung erforderlichen Messwerte werden einerseits von einer Messeinheit zur Erfassung der momentanen Anlagen-Energiemenge und andererseits durch eine Messeinheit zur Erfassung des momentanen Werts der Verbraucherenergiemenge des Verbraucherverbunds geliefert. Der zur Warmwasserbereitung erforderliche Heizstab ist im Verfahren als Teil des Verbraucherverbunds beschrieben. Für den dazu eingesetzten Heizstab ist in der DE 20 2010 015 254 U1 vorgesehen, diesen in der Weise zu steuern, dass, wenn immer möglich, der Heizstab geheizt wird. Nachteilig für das vorgeschlagene Verfahren wirkt sich aus, dass sich die Steuerung des Heizstabes auf das Ein- oder Ausschalten beschränkt, ggf. mit Zeitverzögerungsmechanismen. Die in der DE 20 2010 015 254 U1 vorgeschlagene Steuerung führt, wie in Fig. 2 der DE 20 2010 015 254 U1 dargestellt, dazu, dass während des Tages mit Ausnahme weniger Momente fortlaufend ein zum Teil über lange Zeiträume erheblicher elektrischer Leistungsfluss zwischen dem öffentlichen Netz und dem Haushalt stattfindet. Mit dem beschriebenen Verfahren ist es auch bei guter Abstimmung und Auslegung der PV-Anlage und dem Leistungsbedarf durch die häuslichen Verbraucher einschließlich der Warmwasserbereitung bei vorhandenem Überschussstrom nicht möglich, über längere Zeitspannen während des Tages einen annähernd vollständigen Stromeigenverbrauch zu erreichen. Des Weiteren kann sich ein weiterer Punkt in der Systemarchitektur, insbesondere die Platzierung der Messeinrichtung zur Erfassung des Verbrauchs durch die häuslichen Verbraucher, nachteilig auf das Verfahren auswirken. Die Messeinrichtung ist zwischen Stromversorgung und Verbraucherverbund platziert. Insbesondere die Tatsache, dass der zur Wassererwärmung eingesetzte Heizstab Teil dieses Verbraucherverbunds ist und damit die vom Heizstab genutzte Leistung in den Messwert der Messeinrichtung eingeht, kann Nachteile bei Messung und Regelung mit sich bringen. Beim Ein- bzw. Ausschalten des Heizstabs kommt es aufgrund der gewählten Systemarchitektur zu einer fortlaufenden Rückkopplung des Ein- oder Ausschaltvorgangs des Heizstabes auf den Messwert, d.h zu einer Rückkopplung zwischen Messwert und Regelgröße. Daraus kann das Problem einer fortlaufenden Über- oder Untersteuerung resultieren, so dass letztlich ein unkontrollierbarer Stromfluss zwischen Hausnetz und öffentlichem Netz kaum vermeidbar ist. Insbesondere in Situationen, in welchen die verfügbare Überschussstromleistung geringer ist als die Aufnahmeleistung des Heizstabs, kann durch ein wiederholtes Ein- und Ausschalten des Heizstabes mit entsprechend starken Leistungsschwankungen bzw. -wechseln ein Stromfluss zwischen Haushalt und öffentlichem Netz resultieren. Das hat zur Folge, dass mit Ausnahme weniger Augenblicke während des Tages zwangsläufig zum Teil nicht unerhebliche Strommengen ins öffentliche Netz fließen bzw. von dort bezogen werden müssen. Letztlich lässt sich mit dem dort vorgeschlagenen Verfahren die Eigenstromnutzungsquote, insbesondere beim Einsatz von Photovoltaikanlagen als Einrichtungen zur Erzeugung erneuerbarer elektrischer Energie, ohne zusätzlich starke Inanspruchnahme von Strom aus dem öffentlichen Netz, nur in begrenztem Umfang steigern, da das Verfahren für die oben beschriebenen Problemfelder 1, 2, 5 und 6 nur eingeschränkt wirksame, für die Problemfelder 3 und 4 keine Lösungsansätze bereit hält.

In der DE 20 2011 005 048 U1 wird für ein Gebäude mit einer gebäudeeigenen Stromerzeugungseinrichtung vorgeschlagen, insbesondere die eigenerzeugte Energie mit Hilfe einer elektrischen Energieverteilungseinrichtung den häuslichen Verbraucher zuzuleiten, mit dem Ziel, eine hohe Eigenstromverbrauchsquote zu erreichen. Neben den allgemein bekannten häuslichen Verbrauchern ist eine Wassererwärmung mittels eines Heizstabes Teil des häuslichen Verbraucherverbunds. Die Erfassung, ob Überschussstrom verfügbar ist, erfolgt mit Hilfe einer Wirkleistungsmessvorrichtung, welche an einer Schnittstelle zwischen dem elektrischen Hausnetz und dem öffentlichen Netz angeordnet ist. Nachteilig für das beschriebene Verfahren kann sich die vorgeschlagene Systemarchitektur sowie das Mess- und Regelprinzip auswirken. Insbesondere nachteilig auswirken kann sich die Tatsache, dass der Heizstab zur Warmwasserbereitung Teil des Hausnetzes ist und damit eine Leistungsaufnahme des Heizstabs direkt rückkoppelnden Einfluss auf den Messwert hat. Insbesondere in Situationen, in welchen es zu abrupten und starken Laständerungen, entweder bei der Strombereitstellung oder beim Verbrauch durch die häuslichen Verbraucher kommt, besteht bei der gewählten Systemarchitektur fortlaufend das Problem der Über- oder Untersteuerung bei der Nachregelung der Leistungszufuhr zum Heizstab. Ebenfalls nachteilig für das beschriebene Verfahren kann sich die Platzierung sowie das Messprinzip der Messeinrichtung zwischen Hausnetz und öffentlichem Netz auswirken, da die Messeinrichtung nur dann Messwerte erzeugen kann, wenn tatsächlich Strom zwischen Hausnetz und öffentlichem Netz fließt. Das heißt, die gewählte Systemarchitektur bedingt zwangsläufig einen unkontrollierbaren Stromfluss zwischen Hausnetz und öffentlichem Netz, zumal das Messprinzip darauf beruht, dass dieser Stromfluss als Steuer- und Regelgröße genutzt wird. Letztlich lässt sich mit dem in der DE 20 2011 005 048 U1 vorgeschlagenen Verfahren eine nahezu vollständige Eigenstromnutzung über eine längere Zeitspanne während des Tages, insbesondere beim Einsatz von Photovoltaikanlagen als Einrichtungen zur Erzeugung erneuerbarer elektrischer Energie, ohne zusätzliche Inanspruchnahme von Strom aus dem öffentlichen Netz oder ohne ungewollte Netzeinspeisung, nur eingeschränkt erreichen.

In der WO 2008/125696 A2 wird vorgeschlagen, mit Hilfe eines Lastmanagementsystems elektrische Energie, insbesondere Energie aus einem Kleinstkraftwerk (z.B. Photovoltaik, Windkraft, Wasserkraft), verschiedenen Verbrauchergruppen zuzuführen, mit dem Ziel, verfügbaren Eigenstrom so einzusetzen, dass eine hohe Eigenstromnutzungsquote erzielt wird. Als ein Grund, der für diese Vorgehensweise spricht, wird genannt, dass es ökonomischer sein kann, Strom selbst zu verbrauchen In der WO 2008/125696 A2 wird weiterhin beschrieben, dass Überschussstrom auch in einen Energie-Speicherstromkreis geleitet werden kann. Der Energie-Speicherstromkreis beinhaltet beispielsweise einen elektrischen Heizstab oder eine elektrisch betriebene Fußbodenheizung/Speicherheizung. Der Energie-Speicherstromkreis kann über einen Thyristor variabel mit Energie versorgt werden. Aufgrund der Tatsache, dass sowohl die Erzeugungsleistung der Energieerzeugungsanlage als auch die Verbrauchsleistung durch die häuslichen Verbraucher sehr stark schwanken, ist für die Regelung der Energiezuleitung an den Energie-Speicherstromkreis mittels Thyristor eine nur sehr langsame Nachregelung vorgesehen. Als Ziel wird beschrieben, dass ein plötzlicher Anstieg bzw. Abfall der Überschussstromleistung bei der Stromzuteilung durch den Thyristor an den Energie-Speicherstromkreis nur sehr langsam bzw. verzögert nachvollzogen werden soll, um die Energieversorgung des Energie-Speicherstromkreises kontinuierlich zu gestalten. Nachteilig für das beschriebene Verfahren kann sich die vorgeschlagene Systemarchitektur, insbesondere die Platzierung der Messeinrichtung zur Erfassung des Verbrauchs durch die Verbraucher zwischen Stromversorgung und Hauptverteiler auswirken, insbesondere weil der Energie-Speicherstromkreis als Teil der an den Hauptverteiler angeschlossenen Verbraucher beschrieben wird und damit die durch den Energie-Speicherstromkreis genutzte Leistung wiederum in den Messwert der Messeinrichtung eingeht. Beim Ein- bzw. Ausschalten oder beim Nachregeln des Thyristors zur Versorgung des Heizstabs kommt es durch die gewählte Systemarchitektur zu einer direkten Rückkopplung des sich verändernden Stromverbrauchs des Energie-Speicherstromkreises auf den Messwert. Insbesondere in Situationen, in welchen es zu häufigen, abrupten und starken Laständerungen, entweder bei der Strombereitstellung oder beim Verbrauch durch die Verbraucher, kommt, besteht fortlaufend das Problem einer Über- oder Untersteuerung bei der Nachregelung der Leistungszufuhr zum Energie-Speicherstromkreis, mit der Folge, dass eine annähernd vollständige Eigenstromnutzung über längere Zeitabschnitte des Tages mit dem vorgeschlagenen Verfahren praktisch nicht erreichbar ist. In der WO 2008/125696 A2 wird zu diesem Problemkreis daher vorgeschlagen, die variable Versorgung des Energie-Speicherstromkreises über einen Thyristor in der Weise zu bewerkstelligen, dass ein plötzlicher Anstieg bzw. Abfall der Überschussstromleistung nur sehr langsam bzw. verzögert vom Energie-Speicherstromkreis nachvollzogen wird. Die beschriebene Vorgehensweise hat zur Folge, dass ein unkontrollierbarer Stromfluss zwischen Hausnetz und öffentlichem Netz kaum vermeidbar ist. Nachteilig für das beschriebene Verfahren könnte sich auch dessen Komplexität sowie die sehr schwierige Nachrüstung bereits bestehender Energieversorgungsanlagen auswirken.

Aus der Praxis bekannt ist auch der Einsatz von Batteriespeichersystemen, mit welchen erzeugte elektrische Energie über einen begrenzten Zeitraum von meist mehreren Stunden bis mehreren Tagen gespeichert und bei Bedarf wieder bereitgestellt werden kann. Derartige Systeme eignen sich, kurzfristige Schwankungen über wenige Stunden bis wenige Tage zwischen erzeugter erneuerbarer elektrischer Energie und dem Bedarf an elektrischer Energie durch die Verbraucher zu überbrücken. Insbesondere die hohen Kosten, aber auch erhöhte Energieverluste der Systeme bei Langzeitspeicherung, begrenzen dabei derzeit den Einsatz der Systeme auf die Nutzung innerhalb begrenzter Zeiträume. In der Praxis sind diese Systeme momentan aufgrund der hohen Kosten für die Speicherung von elektrischer Energie noch wenig verbreitet. Häufig werden diese Systeme auch als so genannte Back-Up-Systeme eingesetzt, welche in der Lage sind, kurzfristige, wenige Minuten bis wenige Stunden andauernde Ausfälle des öffentlichen Stromnetzes zu überbrücken. Diese Systeme bieten insofern Lösungsansätze, insbesondere auch in Kombination mit einem Lastmanagementsystem, zur weitgehenden Erfüllung der in den Problemfeldern 1 und 2 angesprochenen Forderungen. Insbesondere beim Einsatz von Photovoltaikanlagen als Einrichtung zur Erzeugung erneuerbarer elektrischer Energie bieten diese Systeme keinen Lösungsansatz für Problemfeld 3 und nur einen eingeschränkten Lösungsansatz für Problemfeld 4. Aufgrund der aus wirtschaftlichen und technischen Gegebenheiten zeitlich eingeschränkten Speichermöglichkeiten für elektrische Energie lässt sich bei den gegebenen Leistungsunterschieden zwischen einem Sommertag und einem Wintertag nur eine eingeschränkte Eigenstromnutzungsquote erzielen.

Es ist daher Aufgabe der vorliegenden Erfindung, ein Verfahren und eine Vorrichtung zur Nutzung elektrischer Energie einer an ein Hausstromnetz angeschlossenen Einrichtung zur Erzeugung erneuerbarer elektrischer Energie, insbesondere einer Photovoltaikanlage und/oder einer Windkraftanlage, zu schaffen, das eine einfache und ökonomisch attraktive Möglichkeit zur Beseitigung der oben genannten Probleme bietet.

Erfindungsgemäß wird diese Aufgabe durch die in Anspruch 1 genannten Merkmale gelöst.

Das erfindungsgemäße Verfahren weist für alle oben erläuterten Problemfelder Lösungsansätze auf. Zum einen kann die von der Einrichtung zur Erzeugung erneuerbarer elektrischer Energie erzeugte und nicht gleichzeitig von den an dem Hausstromnetz angeschlossenen Verbrauchern genutzte elektrische Energie sinnvoll eingesetzt werden, um mittels der Heizeinrichtung das Wärmespeichermedium zu erwärmen, dessen Energieinhalt dann zu einem späteren Zeitpunkt verbraucht werden kann. Zum anderen wird die Menge der ansonsten dem öffentlichen Stromnetz zugeführten elektrischen Energie verringert, was gerade bei Anlagen interessant ist, mit denen nur eine geringe Einspeisevergütung erzielt werden kann. Als vorteilhafter Nebeneffekt können auf diese Weise die zukünftig schärfer werdenden Bestimmungen im Hinblick auf die maximal in das öffentliche Stromnetz einspeisbare Menge an elektrischer Energie eingehalten werden.

Ein besonderer Vorteil des erfindungsgemäßen Verfahrens besteht darin, dass der von der Einrichtung zur Erzeugung erneuerbarer elektrischer Energie erzeugte Strom effektiver als bislang genutzt werden kann. Da bereits derzeit Wärmespeicher existieren, die nur sehr geringe Wärmeverluste aufweisen, hat die Erwärmung eines Wärmespeichermediums mit dem Ziel einer anschließenden Nutzung der Wärmeenergie im Gegensatz zu verschiedenen anderen Arten der Stromnutzung einen sehr hohen Wirkungsgrad. Dabei wird der vorteilhafte Effekt ausgenutzt, dass bei der Erwärmung des Wärmespeichermediums die darin investierte elektrische Energie nicht verloren geht, sondern in Form einer höheren Temperatur gespeichert wird, die dann als Wärmeenergie, z.B. in Form von erwärmtem Brauchwasser, von erwärmtem Heizwasser oder mittels eines sonstigen Wärmetransportmediums oder in anderer Form zur Nutzung der Wärmeenergie abgerufen wird.

Dabei ist es als sehr vorteilhaft herauszustellen, dass trotz der effektiven Nutzung der von der Einrichtung zur Erzeugung erneuerbarer elektrischer Energie erzeugten elektrischen Energie sämtliche an dem Hausstromnetz angeschlossenen Verbraucher uneingeschränkt betrieben werden können, da lediglich die von den Verbrauchern nicht verbrauchte, überschüssige elektrische Energie zum Erwärmen des Wärmespeichermediums mit der Heizeinrichtung genutzt wird.

Unter Berücksichtigung der derzeitigen Herstellungskosten für Einrichtungen zur Erzeugung erneuerbarer elektrischer Energie, insbesondere der Kosten für Photovoltaikanlagen, und der geschätzten Kosten, die zur Durchführung des Verfahrens anlageseitig eingesetzt werden müssen, sind die Kosten für die Erwärmung des Wärmespeichermediums mit dem erfindungsgemäßen Verfahren bereits derzeit wettbewerbsfähig gegenüber den Kosten einer thermischen Solaranlage für die Wärmebereitstellung. Aufgrund der zu erwartenden Steigerung des Wirkungsgrads und weiterhin rückläufiger Marktpreise für Photovoltaikanlagen ist mit einer weiteren Veränderung des Kostengefüges zugunsten des erfindungsgemäßen Verfahrens zu rechnen. Da Photovoltaikanlagen im Gegensatz zu thermischen Solaranlagen einen erheblich geringeren Eingriff in das Gebäude erfordern, beispielsweise weil lediglich Strom- und keine Wasserleitungen verlegt werden müssen, ermöglicht das erfindungsgemäße Verfahren den vollständigen Verzicht auf thermische Solaranlagen. Ein weiterer Nachteil solcher thermischer Solaranlagen, der mit der erfindungsgemäßen Lösung beseitigt werden kann, besteht darin, dass diese bei sehr hohen Einstrahlungssummen, die beispielsweise an heißen Sommertagen erreicht werden können, abgeschaltet werden müssen, da die zur Verfügung stehenden Wärmespeicher gefüllt sind, was bei Photovoltaikanlagen nicht der Fall ist. Diese können nach vollständiger Füllung der Wärmespeicher dadurch weiter betrieben werden, dass der erzeugte Strom ins öffentliche Netz eingespeist werden kann.

In entsprechend bevorzugten Gebieten und/oder bei sehr energiesparender Bauweise von Gebäuden, beispielsweise Passivhaus-Bauweise, kann der Einsatz des erfindungsgemäßen Verfahrens sogar übliche Heizungsanlagen ersetzen, wenn gewährleistet werden kann, dass die Einrichtung zur Erzeugung erneuerbarer elektrischer Energie in der Lage ist, eine ausreichende Menge an Wärmespeichermedium zu erwärmen bzw. mit Energie zu beladen. Wenn dabei ein sehr großer Wärmespeicher oder ein anderer Langzeit-Wärmespeicher eingesetzt wird, können auch Tage überbrückt werden, in denen die Einrichtung zur Erzeugung erneuerbarer elektrischer Energie keine oder nur sehr wenig elektrische Energie liefert und die Heizeinrichtung daher nicht mit elektrischer Energie versorgt werden kann. Bei Verwendung einer Photovoltaikanlage als Einrichtung zur Erzeugung erneuerbarer elektrischer Energie ist zu erwarten, dass zumindest im Sommer vollständig und in den Übergangszeiten zwischen Heizperiode und Sommer bzw. Sommer und nachfolgender Heizperiode überwiegend auf eine Erwärmung des Wärmespeichermediums mittels fossiler Brennstoffe verzichtet werden kann. Auf diese Weise wird die Nutzung des von der Photovoltaikanlage erzeugten Stroms für die Erwärmung des Wärmespeichermediums und anschließender Nutzung der Wärme beispielsweise als erwärmtes Brauchwasser oder erwärmtes Heizwasser oder in anderer Form wirtschaftlicher als die Einspeisung des Stroms in das öffentliche Stromnetz, insbesondere wenn gegebenenfalls sogar auf eine Heizung mit fossilen Brennstoffen verzichtet werden kann.

Ein besonderer Vorteil der vorliegenden Erfindung besteht außerdem darin, dass diese erneuerbare, regenerative Energie nutzt und damit zum Umwelt- und Klimaschutz beiträgt.

Ein weiterer besonderer Vorteil der vorliegenden Erfindung liegt in der gewählten Systemarchitektur und im gewählten rückkopplungsfreien Messprinzip. Insbesondere die Anordnung der Messeinrichtungen, zum Einen zur Messung der Energieerzeugung durch die Einrichtung zur Erzeugung erneuerbarer elektrischer Energie und zum Anderen zur Messung des Energieverbrauchs durch den Verbraucherverbund sowie die Anordnung der Heizeinrichtung, die nicht Teil des Verbraucherverbunds ist, sondern als eigenständiger Verbraucher direkt an das Hausstromnetz angeschlossen ist, gewährleistet Folgendes: Durch die Tatsache, dass die Heizeinrichtung nicht Teil des Verbraucherverbunds ist, kann eine rückkopplungsfreie Messung und Differenzbildung zwischen Stromerzeugung durch die Einrichtung zur Erzeugung erneuerbarer elektrischer Energie und dem Verbrauch durch den häuslichen Verbraucherverbund erfolgen. Die ermittelte Differenz wird in der Mess-, Verarbeitungs- und Regeleinheit der Heizstrommanagementeinheit verarbeitet. Die Mess-, Verarbeitungs- und Regeleinheit gibt Steuersignale an die Umsetzungseinheit weiter, welche exakt die der aktuell ermittelten Resteigenstromüberschussleistung entsprechende elektrische Leistung aus dem Hausnetz auskoppelt und über die Kaskadeneinheit der Heizeinrichtung zuführt. Da die Heizeinrichtung nicht Teil des häuslichen Verbraucherverbunds ist, gibt es keine Rückkopplung durch die Leistungsaufnahme der Heizeinrichtung auf den nachfolgenden Messwert der Messeinrichtung zur Messung des Verbrauchs durch den häuslichen Verbraucherverbund. Messung, Differenzbildung, Steuerung, Regelung und Zuführung von elektrischer Leistung an die Heizeinrichtung erfolgen kontinuierlich oder in sehr kurzen Zeitabständen, so dass gewährleistet ist, dass praktisch zu jedem Zeitpunkt immer genau die aktuell vorhandene Resteigenstromüberschussleistung aus dem Hausnetz ausgekoppelt und der Heizeinrichtung zugeführt werden kann. Dies gilt insbesondere auch dann, wenn sehr starke Schwankungen in der Energieerzeugungsleistung der Einrichtung zur Erzeugung erneuerbarer elektrischer Energie oder des Verbrauchs durch den Verbraucherverbund ohne Heizeinrichtung zu beobachten sind. Ein weiterer Vorteil der gewählten Systemarchitektur mit rückkopplungsfreiem Messprinzip ist, dass sowohl bei geringer als auch bei mittlerer und hoher Resteigenstromüberschussleistung eine sehr genaue Leistungsauskopplung möglich ist. Diese Tatsache ermöglicht darüber hinaus, dass mit der vorliegenden Erfindung der Stromfluss zwischen Hausnetz und öffentlichem Netz auf einfache Weise gut steuerbar und ggf. für den Netzbetreiber in besonderer Weise nutzbar gemacht werden kann, wie in einer später noch beschrieben vorteilhaften Weiterbildung dargestellt wird.

In einer sehr vorteilhaften Weiterbildung der Erfindung kann vorgesehen sein, dass die Differenz zwischen der von der Einrichtung zur Erzeugung erneuerbarer elektrischer Energie erzeugten elektrischen Energie und der von den an dem Hausstromnetz angeschlossenen Verbrauchern ohne die Heizeinrichtung verbrauchten elektrischen Energie kontinuierlich ermittelt wird. Bei einer solchen kontinuierlichen Vorgehensweise kann ständig eine Zuführung von elektrischer Energie zu der Heizeinrichtung in Höhe der von den Verbrauchern nicht genutzten elektrischen Energie erfolgen, wodurch die Effektivität des erfindungsgemäßen Verfahrens noch weiter gesteigert wird.

Wenn in einer weiteren vorteilhaften Ausgestaltung der Erfindung vorgesehen ist, dass einer der an dem Hausstromnetz angeschlossenen Verbraucher eine Speichereinrichtung zum Speichern von elektrischer Energie ist, wobei die von den restlichen Verbrauchern nicht verbrauchte elektrische Energie der Speichereinrichtung zugeführt wird, so kann eine wenigstens annähernd vollständige Nutzung der von der Einrichtung zur Erzeugung erneuerbarer elektrischer Energie erzeugten elektrischen Energie bzw. im Falle einer Photovoltaikanlage der Stromerzeugung durch solare Einstrahlung erzielt werden. In diesem Fall wird also, wenn die Speichereinrichtung eine entsprechende Kapazität zur Aufnahme elektrischer Energie aufweist, diese als vor der Heizeinrichtung bevorzugter Verbraucher innerhalb des Hausnetzes angesehen, so dass eine Priorisierung dahingehend erfolgt, dass zunächst die an dem Hausstromnetz angeschlossenen Verbraucher, anschließend die Stromspeichereinrichtung und zuletzt die Heizeinrichtung mit elektrischer Energie versorgt werden. Durch eine solche Stromspeichereinrichtung kann ein Ein- oder Zweifamilienhaus gegebenenfalls vollständig autark von dem öffentlichen Stromnetz und ohne den Einsatz fossiler Brennstoffe mit elektrischer Energie versorgt werden.

Eine weitere sehr vorteilhafte Weiterbildung der Erfindung kann darin bestehen, dass die Heizeinrichtung wenigstens einen in einen Wärmespeicher ragenden, elektrischen Heizstab aufweist, und dass die elektrische Energie dem wenigstens einen elektrischen Heizstab modulierend zugeführt wird. Ein solches Modulieren der elektrischen Leistung des wenigstens einen Heizstabs ermöglicht es, demselben jeweils die gerade zur Verfügung stehende elektrische Energie zuzuführen, um diese auf besonders effektive Art und Weise zu nutzen.

Wenn des Weiteren vorgesehen ist, dass die Heizeinrichtung wenigstens zwei bezüglich des Wärmespeichers in verschiedenen Zonen angeordnete Heizstäbe aufweist, wobei die elektrische Energie bevorzugt einem der wenigstens zwei Heizstäbe zugeführt wird, so wird der Tatsache Rechnung getragen, dass sich in Wärmespeichern Zonen mit unterschiedlich hohen Temperaturen und damit unterschiedlichem Energiegehalt ausbilden. Durch diese Vorgehensweise wird sichergestellt, dass es bei der Wärmeentnahme möglich ist, zunächst die Energie aus der wärmsten Zone zu entnehmen, sodass die zuerst entnommene Wärmemenge am wärmsten ist. Im Falle von Wasser als Wärmespeichermedium können die wenigstens zwei Heizstäbe bezüglich des Wärmespeichers vorzugsweise übereinander angeordnet sein, wobei die elektrische Energie bevorzugt dem obersten der wenigstens zwei Heizstäbe zugeführt wird. Dadurch wird gewährleistet, dass die oberste Schicht zuerst erwärmt wird, um sicherzustellen, dass die zuerst entnommene Wassermenge am wärmsten ist.

Auf eine Zonierung innerhalb des Wärmespeichers bei Verwendung von wenigstens zwei Heizstäben kann aber auch in Abhängigkeit der Anforderungen ganz verzichtet werden.

Um entscheiden zu können, ob der Heizeinrichtung die überschüssige elektrische Energie zugeführt werden sollte oder ob es zu bevorzugen ist, diese möglicherweise in das öffentliche Stromnetz oder gegebenenfalls in eine Stromspeichereinrichtung abzugeben, kann in einer weiteren vorteilhaften Ausgestaltung der Erfindung vorgesehen sein, dass die Temperatur des von der Heizeinrichtung erwärmten Wärmespeichermediums gemessen wird, und dass die Zufuhr von elektrischer Energie zu der Heizeinrichtung in Abhängigkeit von der gemessenen Temperatur des Wärmespeichermediums geregelt wird. Dadurch kann, falls die Temperatur des Wärmespeichermediums unter ein bestimmtes Niveau gefallen ist, das Wärmespeichermedium erwärmt werden, bevor die elektrische Energie der Speichereinrichtung abgegeben wird. Umgekehrt kann bei Erreichen einer bestimmten Temperatur die Zufuhr von elektrischer Energie zu der Heizeinrichtung bzw. zu einem bestimmten Heizstab eingestellt werden.

Des Weiteren kann vorgesehen sein, dass zumindest ein Teil der Wärmeenergie des mittels der Heizeinrichtung erwärmten Wärmespeichermediums einer Heizungsanlage zugeführt wird. Dadurch ist es möglich, in Abhängigkeit von der Ausbeute der Einrichtung zur Erzeugung erneuerbarer elektrischer Energie bzw. speziell der Sonneneinstrahlung auf die Photovoltaikanlage, die Heizungsanlage zumindest zu einem gewissen Teil mit der von der Einrichtung zur Erzeugung erneuerbarer elektrischer Energie erzeugten elektrischen Energie zu betreiben. Wie groß dieser Teil ist, hängt selbstverständlich von den jeweiligen Gegebenheiten der Heizungsanlage, der Dämmung des Hauses, den Außentemperaturen und nicht zuletzt auch von der Größe und der Effektivität der Einrichtung zur Erzeugung erneuerbarer elektrischer Energie ab.

In einer weiteren vorteilhaften Ausgestaltung der Erfindung kann vorgesehen sein, dass die Zufuhr von überschüssiger elektrischer Energie aus der Einrichtung zur Erzeugung erneuerbarer elektrischer Energie oder von elektrischer Energie aus dem öffentlichen Stromnetz zur Erwärmung des Wärmespeichermediums durch den Netzbetreiber oder andere Berechtigte gesteuert wird. Damit kann ein Netzbetreiber im Falle von Strombedarf im öffentlichen Netz durch Absenkung des Steuersignals zur Regelung der Zufuhr elektrischer Energie zur Heizeinrichtung bewirken, dass die gesamte oder eine definierte Menge der überschüssiger elektrischer Energie aus der Einrichtung zur Erzeugung erneuerbarer elektrischer Energie ins öffentliche Netz geleitet wird. Im umgekehrten Fall, wenn Stromüberschuss im öffentlichen Netz herrscht, kann durch Erhöhung des Steuersignals zur Regelung der Zufuhr elektrischer Energie zur Heizeinrichtung der gegenteilige Effekt erzielt werden.

Eine Vorrichtung zur Durchführung des erfindungsgemäßen Verfahrens ist in Anspruch 9 angegeben.

Mittels dieser Vorrichtung kann das oben beschriebene Verfahren auf sehr effektive Art und Weise durchgeführt werden, wobei besonders hervorzuheben ist, dass die Vorrichtung nur einen geringen Kostenaufwand notwendig macht und damit zur kostengünstigen und damit wirtschaftlichen Nutzung erneuerbarer elektrischer Energie beiträgt.

In einer vorteilhaften Weiterbildung dieser Vorrichtung kann vorgesehen sein, dass die Heizstrommanagementeinheit eine Mess-, Verarbeitungs- und Regeleinheit zur Messung und Verarbeitung von Signalen, eine Umsetzungseinheit zur modulierenden Entnahme aus dem Hausstromnetz und Bereitstellung elektrischer Energie und eine Kaskadenschalteinheit aufweist, wodurch eine besonders einfache Ansteuerung der Heizeinrichtung möglich ist.

Wenn die Heizeinrichtung wenigstens zwei in Zonen angeordnete, in einen Wärmespeicher ragende Heizstäbe aufweist, denen über die Kaskadenschalteinheit elektrische Energie zuführbar ist, so können bei einem verschiedene Zonen aufweisenden Wärmespeicher die einzelnen Zonen mit dem der jeweiligen Zone zugeordneten Heizstab erwärmt werden.

Nachfolgend ist ein Ausführungsbeispiel der Erfindung anhand der Zeichnung prinzipmäßig dargestellt.

Es zeigt:
- Fig. 1: eine Vorrichtung zur Durchführung des erfindungsgemäßen Verfahrens;
- Fig. 2: ein Diagramm, das den Tagesverlauf der Stromerzeugung einer Photovoltaikanlage sowie die Nutzung von Teilen dieser erzeugten Energie durch das erfindungsgemäße Verfahren an einem bestimmten, ersten Tag darstellt;
- Fig. 3: ein Diagramm, das den Tagesverlauf der Stromerzeugung einer Photovoltaikanlage sowie die Nutzung von Teilen dieser erzeugten Energie durch das erfindungsgemäße Verfahren an einem bestimmten, zweiten Tag darstellt;
- Fig. 4: ein Diagramm, das den Tagesverlauf der Stromerzeugung einer Photovoltaikanlage sowie die Nutzung von Teilen dieser erzeugten Energie durch das erfindungsgemäße Verfahren an einem bestimmten, dritten Tag darstellt; und
- Fig. 5: ein Diagramm, das den Tagesverlauf der Stromerzeugung der Photovoltaikanlage sowie die Nutzung von Teilen dieser erzeugten Energie durch das erfindungsgemäße Verfahren an dem Tag aus Fig. 2 mit einer Vorrangschaltung durch den Netzbetreiber, den Anlagenbetreiber selbst oder anderen berechtigte Personen oder Einrichtungen darstellt.

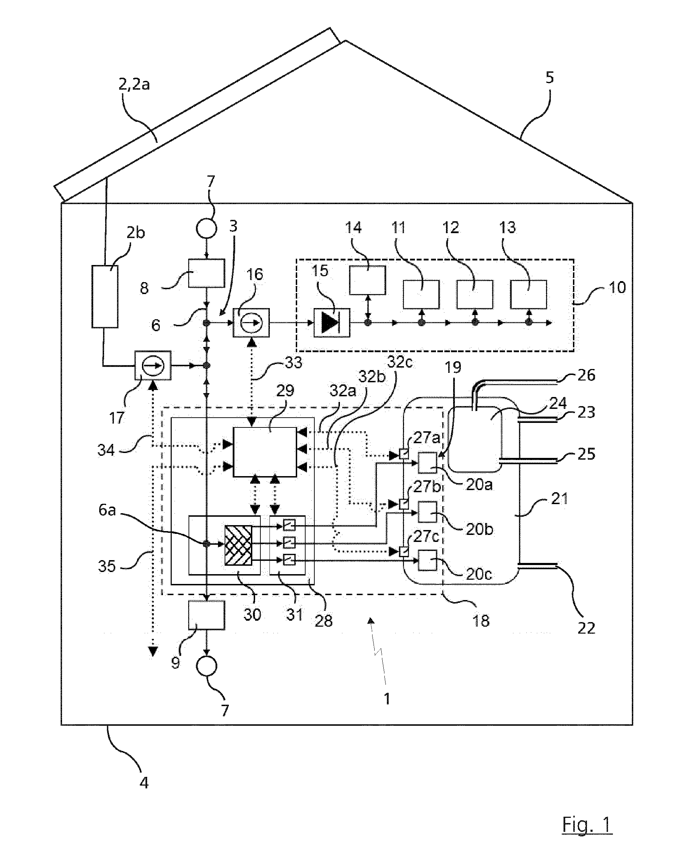

Fig. 1 zeigt eine Vorrichtung 1 zur Durchführung eines Verfahrens zur Nutzung elektrischer Energie einer Einrichtung 2 zur Erzeugung erneuerbarer elektrischer Energie, die an ein Hausstromnetz 3 angeschlossen ist. Mit dem hierin verwendeten Begriff "Hausstromnetz" sind auch Betriebs-, Unternehmens- oder ähnliche Stromnetze gemeint, die keine öffentlichen Stromnetze sind. Die Einrichtung 2 zur Erzeugung erneuerbarer elektrischer Energie ist im vorliegenden Fall als Photovoltaikanlage 2a ausgebildet. Es könnte sich dabei jedoch zum Beispiel auch um eine Windkraftanlage handeln. Des Weiteren ist auch eine Kombination der Photovoltaikanlage 2a mit einer Windkraftanlage oder mehrerer oder anderen Anlagen möglich.

Die Photovoltaikanlage 2a ist in der Praxis je nach Auslegung über einen oder mehrere Wechselrichter 2b ein-, zwei- oder dreiphasig an das Hausstromnetz 3 eines Gebäudes 4 angeschlossen, das beispielsweise ein Ein-, Zwei- oder Mehrfamilienhaus, aber auch ein Betriebs-oder Unternehmensgebäude sein kann. Vorzugsweise befindet sich die Photovoltaikanlage 2a auf einem Dach 5 des Gebäudes 4, kann aber auch als Fassadenanlage oder Freilandanlage oder in anderer Form ausgebildet sein. Von dem Hausstromnetz 3 ist eine in der Regel dreiphasig ausgelegte Stromversorgungsschiene 6 dargestellt, an der neben der Photovoltaikanlage 2a auch das öffentliche Stromnetz 7 angeschlossen ist bzw. mit anderen Worten die Stromversorgungsschiene 6 ist an das öffentliche Stromnetz 7 angeschlossen. Zwischen dem öffentlichen Stromnetz 7 und der Versorgungsschiene 6 ist auf der einen Seite ein Bezugszähler 8 und auf der anderen Seite ein Einspeisezähler 9 angeordnet. Der Bezugszähler 8 und der Einspeisezähler 9 können in der Praxis auch als Zweirichtungszähler ausgelegt sein. Das Hausstromnetz 3 muss nicht notwendigerweise die Stromversorgungsschiene 6 aufweisen, sondern kann auch auf andere Art und Weise realisiert sein.

Des Weiteren sind an der Stromversorgungsschiene 6 des Hausstromnetzes 3 mehrere Verbraucher angeschlossen, die nachfolgend als Verbraucherverbund 10 bezeichnet werden. Nur beispielhaft kann es sich bei den zu dem Verbraucherverbund 10 gehörenden Verbrauchern um eine Waschmaschine 11, eine Beleuchtungseinrichtung 12 und ein elektronisches Unterhaltungsgerät 13, wie zum Beispiel einen Fernseher, handeln. Des Weiteren ist im vorliegenden Fall in dem Verbraucherverbund 10 eine Stromspeichereinrichtung 14 enthalten, d. h. einer der Verbraucher ist als Stromspeichereinrichtung 14 ausgebildet, die im vorliegenden Fall beispielsweise als Batteriespeicher ausgeführt sein kann. Dem Verbraucherverbund 10 ist des Weiteren eine Rückspeisesperre 15 zugeordnet, die sicherstellt, dass der in der Stromspeichereinrichtung 14 gespeicherte Strom lediglich den Verbrauchern 11, 12 und 13 zugeführt werden kann, die in dem Verbraucherverbund 10 enthalten sind. Unter später noch erläuterten Bedingungen könnte auf die Rückspeisesperre 15 auch verzichtet werden bzw. diese könnte eine geringfügig abgewandelte Funktion übernehmen.

Zwischen der Stromversorgungsschiene 6 und dem Verbraucherverbund 10 ist eine Messeinrichtung 16 vorgesehen, welche den momentanen Verbrauch der Verbraucher 11, 12 und 13 des Verbraucherverbunds 10 an elektrischer Energie und somit den Gesamtverbrauch des Verbraucherverbunds 10 an elektrischer Energie misst. In ähnlicher Weise ist die Photovoltaikanlage 2a bzw. allgemein die Einrichtung 2 zur Erzeugung elektrischer, erneuerbarer Energie über eine Messeinrichtung 17 mit der Stromversorgungsschiene 6 und somit mit dem Hausstromnetz 3 verbunden, welche zur Ermittlung der momentan erzeugten elektrischen Einspeiseleistung der Photovoltaikanlage 2a dient. Die Messeinrichtung 17 kann auch als Bauteil des Wechselrichters 2b der Photovoltaikanlage, insbesondere als Messeinrichtung zur Erfassung der Einspeiseleistung und -arbeit des Wechselrichters 2b in das Hausstromnetz 3, realisiert sein.

Die Vorrichtung 1 weist des Weiteren eine Zuteilungseinrichtung 18 auf, die zur Zuteilung von elektrischem Strom bzw. elektrischer Energie zu einer im vorliegenden Fall als Wassererwärmungseinrichtung ausgebildeten Heizeinrichtung 19 dient. Die Zuteilungseinrichtung 18, eine zu der Zuteilungseinrichtung 18 gehörende Heizstrommanagementeinheit 28 und die Heizeinrichtung 19 sind im dargestellten Ausführungsbeispiel nicht Teil des Verbraucherverbunds 10 sondern als eigenständige Verbrauchereinheit direkt an das Haustromnetz 3, im Regelfall an die Stromversorgungsschiene 6, angeschlossen. Dieser Anschluss ist hier als Entnahmepunkt 6a dargestellt. Die Messeinrichtung 16 ist in der Weise platziert, dass durch sie ausschließlich der Verbrauch des Verbraucherverbunds 10 an elektrischer Energie gemessen wird. Der Verbrauch der Zuteilungseinrichtung 18 mit der Heizstrommanagementeinheit 28 und insbesondere der Verbrauch der Heizeinrichtung 19 wird von Messeinrichtung 16 nicht erfasst, wodurch ein rückkopplungsfreies Mess- und Regelprinzip gewährleistet wird.

In nicht dargestellter Weise kann die geringe, zum Betrieb der Steuer- und Regelungselektronik der Heizstrommanagementeinheit 28 erforderliche elektrische Energie in einer weiteren Ausbildung der Erfindung auch entweder aus dem Versorgungsbereich des häuslichen Verbraucherverbunds 10 oder aus dem zur Einspeisung aufbereiteten Strom im Wechselrichter 2b vor der Messeinrichtung 17, das heißt auf der Seite der Einrichtung 2 zur Erzeugung erneuerbarer elektrischer Energie, entnommen werden, während die Versorgung der Heizeinrichtung 19 mit Resteigenstromüberschuss in jedem Fall durch einen eigenständigen, direkten Anschluss an das Hausstromnetz 3, im Regelfall an der Stromversorgungsschiene 6, wie beispielhaft durch den Entnahmepunkt 6a dargestellt, erfolgt. Mit dieser Systemarchitektur wird eine rückkopplungsfreie Messung und Differenzbildung zwischen der Messeinrichtung 17 zur Ermittlung der momentan erzeugten elektrischen Einspeiseleistung und der Messeinrichtung 16 zur Ermittlung der momentanen Verbrauchsleistung durch den Verbraucherverbund 10 ohne die Heizeinrichtung 19 in einer weiteren besonderen Weise realisiert.

Durch die Tatsache, dass die Heizeinrichtung 19 in keinem Fall Teil des Verbraucherverbunds 10, sondern immer als eigenständige Verbrauchereinheit direkt an das Hausstromnetz 3, im Regelfall an die Stromversorgungsschiene 6, angeschlossen ist, ist sichergestellt, dass die Regelung der Leistungszufuhr an die Heizeinrichtung 19 immer auf dem rückkopplungsfreien Mess- und Regelprinzip beruht.

In einer weiteren nicht dargestellten Weise können Komponenten der Heizstrommanagementeinheit 28, insbesondere die Umsetzungseinheit 30 und der Entnahmepunkt 6a zur Versorgung der Heizeinrichtung 19 mit Resteigenstromüberschuss aus dem Hausnetz 3, zwischen der Messeinrichtung 17 und der Stromversorgungsschiene 6 platziert sein. Bei dieser Systemgestaltung ist ebenfalls das rückkopplungsfreie Mess- und Regelprinzip und die direkte Versorgung der Heizeinrichtung 19 mit Resteigenstromüberschuss aus dem Hausnetz 3 sichergestellt, da die Heizeinrichtung 19 hier ebenfalls nicht Teil des häuslichen Verbraucherverbunds 10 ist. Vorteile bietet diese Variante insbesondere bei der praktischen Gestaltung, da bestimmte Bauteile der Vorrichtung 1 räumlich nach, an oder in Wechselrichtern realisiert werden können.

Die Heizeinrichtung 19 weist wenigstens einen, im vorliegenden Fall drei Heizstäbe 20a, 20b und 20c auf, die in einen im vorliegenden Fall als Wasserspeicher ausgebildeten Wärmespeicher 21 ragen, um in demselben enthaltenes Wärmespeichermedium zu erwärmen. Als Wärmespeichermedium wird im vorliegenden Fall Wasser eingesetzt, es kommen jedoch auch andere Wärmespeichermedien in Frage, insbesondere solche, die in der Lage sind, deutlich höhere Speichertemperaturen zu erreichen oder Energiemengen je Volumeneinheit zu speichern, wie beispielsweise bestimmte Salze, Metalle, Steine, Phasenwechselmaterialien oder ähnliches. Der Wärmespeicher 21 ist vorzugsweise als Schichtenspeicher ausgebildet, in dem das Wärmespeichermedium in an sich bekannter Weise in mehreren Schichten mit unterschiedlichen Temperaturen übereinander geschichtet ist. Zu dem Wärmespeicher 21 führt eine Zufuhrleitung 22, über welche dem Wärmespeicher 21 nicht erwärmtes Wärmetransportmedium zugeführt wird, wohingegen über eine Entnahmeleitung 23 das erwärmte Wärmetransportmedium aus dem Wärmespeicher 21 entnommen werden kann. Des Weiteren ist im vorliegenden Ausführungsbeispiel innerhalb des Wärmespeichers 21 eine Warmwassereinheit 24 für beispielsweise Brauch- und Trinkwasser vorgesehen, zu der eine Zufuhrleitung 25 für Frischwasser führt und an der eine Entnahmeleitung 26 zum Entnehmen von erwärmtem Brauchwasser angebracht ist. Das in dem Wärmespeicher 21 enthaltene Wärmespeichermedium könnte zusätzlich auch mittels einer nicht dargestellten Heizungsanlage erwärmt werden, die mit fossilen und/oder auch nachwachsenden Brennstoffen, wie Öl, Gas, oder Holzpellets, betrieben wird.

Grundsätzlich kann das in dem Wärmespeicher 21 enthaltene Wärmespeichermedium in den Wintermonaten also auch mit einer normalen Öl-, Gas- oder ähnlichen Heizung erwärmt werden. Allerdings ist es auch möglich, auf solche fossilen Brennstoffe vollständig zu verzichten, insbesondere wenn die Stromspeichereinrichtung 14 vorhanden ist und auf eine später noch beschriebene Art und Weise eingesetzt wird.

Jedem einzelnen der Heizstäbe 20a, 20b und 20c ist im vorliegenden Fall ein jeweiliger Temperaturfühler 27a, 27b und 27c zugeordnet, mit denen es möglich ist, die Temperatur des von der Heizeinrichtung 19 erwärmten Wärmespeichermediums kontinuierlich zu messen. Die Zuteilungseinrichtung 18 weist des Weiteren die bereits oben erwähnte Heizstrommanagementeinheit 28 auf, die wiederum eine Mess-, Verarbeitungs- und Regeleinheit 29 zur Messung und Verarbeitung von Signalen, beispielsweise von Signalen der Messeinrichtung 16 und/oder 17 und/oder Signalen der Temperaturfühler 27a, 27b und/oder 27c, sowie zur Regelung von Prozessen, eine Umsetzungseinheit 30 zur modulierenden Entnahme aus dem Hausstromnetz 3 und zur modulierenden Bereitstellung elektrischer Energie aus der Stromversorgungsschiene 6 und eine Kaskadenschalteinheit 31 aufweist, deren Funktionen nachfolgend näher erläutert werden. Die Heizstrommanagementeinheit 28 dient zur Zuteilung von elektrischer Energie zu der Heizeinrichtung 19.

Die Mess-, Verarbeitungs- und Regeleinheit 29 ist über jeweilige Steuerleitungen 32a, 32b und 32c mit den Temperaturfühlern 27a, 27b und 27c verbunden. Anstelle von Steuerleitungen können auch andere Signalübertragungssysteme wie beispielsweise Funkübertragung, Übertragung mittels Telekommunikation oder ähnliches eingesetzt werden. Dies gilt für alle Anwendungen, in welchen beim vorliegenden Verfahren Steuerleitungen als Übertragungsweg für Signale und Informationen eingesetzt werden. Über eine weitere Steuerleitung 33 ist die Mess-, Verarbeitungs- und Regeleinheit 29 außerdem mit der Messeinrichtung 16 verbunden, wodurch die Information zur Höhe der momentan von dem Verbraucherverbund 10 verbrauchten elektrische Energie der Mess-, Verarbeitungs- und Regeleinheit 29 zugeführt werden kann. Eine weitere Steuerleitung 34 dient zur Verbindung der Mess-, Verarbeitungs- und Regeleinheit 29 mit der Messeinrichtung 17, um der Mess-, Verarbeitungs- und Regeleinheit 29 die Höhe der momentan erzeugten elektrischen Leistung der Einrichtung 2 zur Erzeugung erneuerbarer elektrischer Energie zukommen zu lassen. Schließlich mündet in die Mess-, Verarbeitungs- und Regeleinheit 29 noch eine Steuerleitung 35, über die gegebenenfalls ein Netzbetreiber, der Anlagenbetreiber selbst oder andere Berechtigte oder Einrichtungen in der Lage sind, durch zeitweise Netzfreischaltung der Heizstrommanagementeinheit 28 und der Heizeinrichtung 19 oder durch Absenkung oder Erhöhung der Zufuhrleistung elektrischer Energie zu der Heizeinrichtung 19 zu erzwingen, dass ein vorhandener Resteigenstromüberschuss ganz oder teilweise in das öffentliche Stromnetz 7 eingespeist oder elektrische Energie, beispielsweise in Form von Überschussstrom, aus dem öffentlichen Stromnetz 7 bezogen wird. Dadurch kann der Netzbetreiber oder andere Berechtigte in Zeiten von Lastspitzen die Einrichtung 2 zur Erzeugung erneuerbarer elektrischer Energie oder den Wärmespeicher ebenfalls nutzen. Die Zeiträume sowie weitere Bedingungen, unter denen es gestattet ist, den Resteigenstromüberschuss in das öffentliche Stromnetz 7 zu leiten, können an der Mess-, Verarbeitungs- und Regeleinheiten 29 vorab freigegeben bzw. eingestellt werden.

Die Zuteilungseinrichtung 18, insbesondere die in derselben enthaltene Heizstrommanagementeinheit 28, ist auf diese Weise in der Lage, die Differenz zwischen der von der Photovoltaikanlage 2a bzw. allgemein von der Einrichtung 2 zur Erzeugung elektrischer Energie erzeugten elektrischen Energie und der von den dem Verbraucherbund 10 zugehörigen Verbrauchern ohne die Heizeinrichtung 19 verbrauchten elektrischen Energie zu messen und die von den zu dem Verbraucherverbund 10 gehörenden Verbrauchern 11, 12, 13, 14 nicht verbrauchte, überschüssige elektrische Energie der Heizeinrichtung 19 zuzuführen. Dabei ermittelt die Mess-, Verarbeitungs- und Regeleinheit 29 in einem ersten Schritt in Zeitintervallen, die vorzugsweise kleiner als 1 Minute, im Regelfall kleiner als 1 Sekunde, sind, die Differenz zwischen der von der Photovoltaikanlage 2a bzw. allgemein von der Einrichtung 2 zur Erzeugung erneuerbarer elektrischer Energie erzeugten elektrischen Leistung und dem momentanen Verbrauch an elektrischer Energie durch den Verbraucherverbund 10 ohne die Heizeinrichtung 19. Die Messung und die Differenzbildung erfolgen dabei rückkopplungsfrei, da die Heizeinrichtung 19 nicht Teil des Verbraucherverbunds 10 ist, sondern als eigenständige Verbrauchereinheit direkt an das Hausstromnetz 3 angeschlossen ist. Durch diese Art der Einbindung der Heizeinrichtung 19 beeinflusst deren Verbrauch an elektrischer Energie keinen der beiden zur Differenzbildung gemessenen Werte, sodass eine Rückkopplung des Verbrauchs von der Heizeinrichtung 19 auf die Messwerte ausgeschlossen ist. Wenn sich aus dieser Differenz der elektrischen Leistung der Einrichtung 2 zur Erzeugung von erneuerbarer Energie abzüglich der elektrischen Verbrauchsleistung des Verbraucherverbunds 10 ohne die Heizeinrichtung 19 ein positiver Wert ergibt, d. h. wenn die Einrichtung 2 zur Erzeugung erneuerbarer elektrischer Energie mehr elektrische Energie erzeugt als der Verbraucherverbund 10 verbraucht, so wird diese Differenz hierin als Resteigenstromüberschuss bezeichnet. Ergibt sich aus dieser Differenz dagegen ein negativer Wert, wenn also die Einrichtung 2 zur Erzeugung erneuerbarer elektrischer Energie weniger elektrische Energie erzeugt als der Verbraucherverbund 10 ohne die Heizeinrichtung 19 verbraucht, so wird diese Differenz hierin als Resteigenstromdefizit bezeichnet.

In einem zweiten Schritt regelt die Mess-, Verarbeitungs- und Regeleinheit 29 vorzugsweise modulierend die Entnahme oder Auskopplung der elektrischen Leistung aus der Stromversorgungsschiene 6 durch die Umsetzungseinheit 30, um die an dem Entnahmepunkt 6a an die Stromversorgungsschiene 6 angeschlossene Heizeinrichtung 19 mit elektrischer Energie bzw. mit Strom zu versorgen. Die entnommene oder ausgekoppelte elektrische Leistung wird vorzugsweise modulierend und kaskadierend den Heizstäben 20a, 20b und 20c zugeleitet. Hierbei bedeutet der Begriff "modulierende Entnahme oder Auskopplung", dass die Entnahme oder Auskopplung durch die Mess-, Verarbeitungs- und Regeleinheit 29 so geregelt wird, dass zu jedem Zeitpunkt genau die elektrische Leistung entnommen oder ausgekoppelt wird, die zum jeweiligen Zeitpunkt als Resteigenstromüberschuss zur Verfügung steht. Dabei sind geringste Schwankungen um den Idealwert unvermeidbar, können aber durch die rückkopplungsfreie Messung und Differenzbildung sowie eine intelligente Steuerungslogik und weitere technische Maßnahmen wie beispielsweise der Einsatz von Bauteilen wie Kondensatoren sehr gering gehalten werden.

Bei dem modulierenden Betrieb wird eine variable Entnahme oder Auskopplung elektrischer Energie aus der Stromversorgungsschiene 6 durch die Zuteilungseinrichtung 18 bzw. eine variable Energieversorgung der angeschlossenen Heizstäbe 20a, 20b und 20c realisiert. Die Zuteilungseinrichtung 18 arbeitet dabei in einem Leistungsbereich zwischen P₀, d. h. keiner Leistung, und Pₘₐₓ, d. h. einer maximalen Leistung der zu versorgenden Bauteile. Vorzugsweise wird die Modulation der den Heizstäben 20a, 20b und 20c zugeführten elektrischen Leistung dadurch realisiert, dass beispielsweise die Spannung der den elektrischen Heizstäben 20a, 20b und 20c zugeführten elektrischen Energie moduliert wird. Die Modulation kann aber auch durch andere geeignete Verfahren wie beispielsweise Phasenanschnitt, Transformatorregelung, Frequenzsteuerung oder einfache Schaltintervalle in Kombination mit Kondensatoren oder anderen geeigneten elektronischen Bauteilen realisiert werden.

Der kaskadierende Betrieb der Heizstäbe 20a, 20b und 20c sieht eine Versorgung der Heizstäbe 20a, 20b und 20c in einer durch eine Regellogik vorgegebenen Rangfolge vor. Bei einer ausreichend hohen verfügbaren Resteigenstromüberschussleistung kann ein Parallelbetrieb mehrerer der Heizstäbe 20a, 20b und 20c erfolgen. Dabei wird vorzugsweise jeweils der in der Rangfolge an letzter Stelle stehende Heizstab, im vorliegenden also der Heizstab 20c und/oder 20b, im modulierenden Betrieb betrieben, während die vorrangig versorgten Heizstäbe, in diesem Fall also 20a und/oder 20b im Volllastbetrieb betrieben werden. Grundsätzlich kann auf den kaskadierenden Betrieb der Heizstäbe 20a, 20b und 20c auch verzichtet werden, d. h. sämtliche Heizstäbe 20a, 20b und 20c können auch parallel modulierend betrieben werden.

Mit diesem Aufbau der Vorrichtung 1 und der beschriebenen Regelung kann gewährleistet werden, dass der von der Einrichtung 2 zur Erzeugung erneuerbarer elektrischer Energie erzeugte Eigenstrom in der Regel wenigstens annähernd vollständig in dem Hausstromnetz 3 des Gebäudes 4 verwendet wird. Dabei werden stets die an dem Verbraucherverbund 10 angeschlossenen Verbraucher 11, 12 und 13 vorrangig mit elektrischer Energie versorgt. Wenn die Stromspeichereinrichtung 14 vorhanden ist, wird sie als zweite Priorität mit Strom versorgt. Anschließend wird die überschüssige elektrische Energie der Heizeinrichtung 19 zugeführt. Vorzugsweise wird die elektrische Energie für die Heizeinrichtung 19 direkt vor dem Anschluss des Hausstromnetzes 3 an das öffentliche Stromnetz 7, also unmittelbar vor dem Einspeisezähler 9, entnommen. Wenn, wie nachfolgend ausführlicher beschrieben, eine weitere Zuführung elektrischer Energie zu der Heizeinrichtung 19 nicht sinnvoll ist, so kann die nicht benötigte elektrische Energie auch in das öffentliche Stromnetz 7 eingespeist werden.

Die Zuleitung des ausgekoppelten Resteigenstromüberschusses von der Umsetzungseinheit 30 an die Heizstäbe 20a, 20b und 20c erfolgt über die Kaskadenschalteinheit 31. Der Wärmespeicher 21, der im vorliegenden Fall als Warmwasserspeicher ausgebildet ist, weist, wie oben beschrieben, mehrere übereinander angeordnete Schichten auf, wobei die Beladung des Wärmespeichers 21 von oben nach unten erfolgt. Auf diese Weise soll gewährleistet werden, dass der obere Bereich, in welchem sich im vorliegenden Fall die Warmwassereinheit 24 befindet, vorrangig auf eine Zieltemperatur, wie beispielsweise 65°C, aufgeheizt wird. Um dies zu erreichen, wird der oberste Heizstab 20a vorrangig modulierend mit elektrischer Energie versorgt. Erst wenn eine ausreichende Menge an Resteigenstromüberschussleistung verfügbar ist oder wenn im obersten Bereich des Wärmespeichers 21 die Zieltemperatur erreicht worden ist, werden die darunter liegenden Heizstäbe 20b und/oder 20c modulierend mit elektrischer Energie versorgt. Durch diese Vorgehensweise wird die Temperaturschichtung in dem Wärmespeicher 21 aufgebaut und erhalten.

Die zur Steuerung der Beladung des Wärmespeichers 21 dienenden Temperaturfühler 27a, 27b und 27c messen die Temperatur des Wärmespeichermediums in der jeweiligen Schicht und geben diese über die Steuerleitungen 32a, 32b und 32c an die Mess-, Verarbeitungs- und Regeleinheiten 29 weiter, die nach einer vorgegebenen Logik sowohl die modulierende Stromentnahme bzw. -auskopplung aus der zentralen Stromversorgungsschiene 6 durch die Umsetzungseinheit 30 sowie die modulierende Stromzuleitung an die Heizstäbe 20a, 20b, 20c über die Kaskadenschalteinheit 31 regelt. Auf diese Weise werden die Heizstäbe 20a, 20b und 20c und damit die Heizeinrichtung 19 also mittels einer Temperaturüberwachung durch die Temperaturfühler 27a, 27b und 27c gesteuert.

Im vorliegenden Fall weist die Heizeinrichtung 19 drei Heizstäbe 20a, 20b und 20c auf. Selbstverständlich kann die Anzahl der Heizstäbe der Heizeinrichtung 19 an die jeweiligen Gegebenheiten angepasst werden. Des Weiteren kann die Heizeinrichtung 19 grundsätzlich einstufig, mehrstufig und/oder modulierend ausgeführt sein.

Nachfolgend wird ausführlicher auf den Regelbetrieb der Vorrichtung 1 eingegangen. In der in der Mess-, Verarbeitungs- und Regeleinheit 29 gespeicherten Regellogik werden zumindest ein Normalbetrieb, d. h. ein Sommerbetrieb, sowie ein Winterbetrieb mit einer Frostfreihaltungsfunktion vorgesehen. Als Zusatzoptionen stehen in jeder Betriebsart eine Netzfreischaltungsregelung durch den Netzbetreiber oder andere Berechtigte in definierten Zeiträumen, ein Einspeisebegrenzungs-Management und ein Notbetrieb der Heizstäbe 20a, 20b und 20c mit elektrischer Energie aus dem öffentlichen Stromnetz 7 zur Verfügung.

Der Verbraucherverbund 10 muss im Tagesverlauf variierend mit elektrischer Leistung aus der Stromversorgungsschiene 6 des Hausstromnetzes 3 versorgt werden. Diese Leistung wird entweder von der Einrichtung 2 zur Erzeugung erneuerbarer elektrischer Energie oder aus dem öffentlichen Stromnetz 7 über den Bezugszähler 8 bezogen. In Zeiträumen, in denen die Einrichtung 2 zur Erzeugung erneuerbarer elektrischer Energie ausreichend Leistung bereitstellt, wird der Verbraucherverbund 10 vorrangig mit Eigenstrom aus der Einrichtung 2 zur Erzeugung erneuerbarer elektrischer Energie versorgt. Wenn ein Resteigenstromüberschuss zur Verfügung steht, wird dieser der Zuteilungseinrichtung 18 für elektrische Energie zugeleitet, die sie dann der Heizeinrichtung 19 zur Verfügung stellen kann.

In dem Fall, in dem die Einspeiseleistung der Photovoltaikanlage 2a auf einen bestimmten Wert, zum Beispiel 70% der Nennleistung des Generators derselben, begrenzt ist, kann mithilfe einer Einspeisebegrenzungsmanagement-Regelung eine Kappung der Tagesspitzen der mit der Photovoltaikanlage 2a erzeugten elektrischen Energie erfolgen. Für den Ausnahmefall, dass der Wärmespeicher 21 keine weitere elektrische Energie zur Erwärmung bzw. Beladung des Wärmespeichermediums mehr aufnehmen kann, kann mithilfe eines Notkühlsystems, beispielsweise eines elektrischen Heizlüfters, die über die 70 % der Leistung des Generators der Photovoltaikanlage 2a hinausgehende elektrische Energie verbraucht werden.

Obwohl oben eine Abschaltung der Heizeinrichtung 19 beim Erreichen einer Temperatur von 65°C beschrieben wird, ist es selbstverständlich möglich, das in dem Wärmespeicher 21 enthaltene Wärmespeichermedium auch auf eine höhere Temperatur, beispielsweise über 80°C, zu erhitzen. Dies gilt auch beim Einsatz anderer Wärmespeichermedien als Wasser, wobei Zieltemperatur und weitere Parameter jeweils in Abhängigkeit der physikalischen und chemischen Eigenschaften der eingesetzten Wärmespeichermedien festgelegt werden.

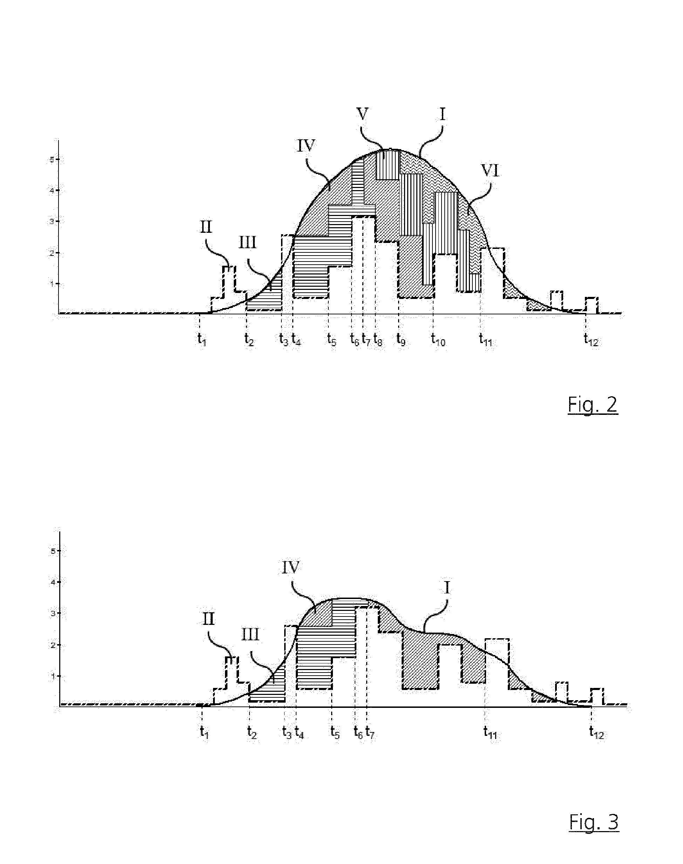

In den Figuren 2 bis 5 sind verschiedene Diagramme dargestellt, die den Tagesverlauf der Stromerzeugung der Photovoltaikanlage 2a an verschiedenen beispielhaften Tagen darstellen.

Fig. 2 zeigt die Stromerzeugung an einem vollsonnigen Sommertag durch die Photovoltaikanlage 2a mittels der mit "I" bezeichneten Linie im Tagesverlauf. An Stelle der Photovoltaikanlage 2a könnte grundsätzlich in sämtlichen Figuren 2 bis 5 auch eine andere Einrichtung 2 zur Erzeugung von erneuerbarer Energie, wie zum Beispiel ein Windkraftrad, oder eine Kombination mehrerer solcher Einrichtungen bzw. Anlagen stehen. Die erzeugte elektrische Energie wird vorrangig dem Verbraucherverbund 10 zugeführt. Dessen Bedarf an elektrischer Leistung variiert im Tagesverlauf sehr stark in Abhängigkeit der Zu- und Abschaltung der eingesetzten Verbraucher 11, 12, 13 und gegebenenfalls 14. In vielen Zeiträumen des Tagesverlaufs ergibt sich dennoch ein Resteigenstromüberschuss, welcher der Heizeinrichtung 19 mit, im vorliegenden Fall, dem Ziel der Brauch- bzw. Prozesswassererhitzung und/oder Heizungsunterstützung zugeführt wird, oder allgemein ausgedrückt mit dem Ziel der Beladung eines Wärmespeichers. Der Betrieb der Zuteilungseinrichtung 18 für elektrische Energie, mit der Heizstrommanagementeinheit 28 und der Heizeinrichtung 19, erfolgt dabei, wie oben beschrieben, im Regelfall modulierend und kaskadierend. Die Zuteilungseinrichtung 18 für elektrische Energie entnimmt der zentralen Stromversorgungsschiene 6 zum jeweiligen Zeitpunkt den verfügbaren Resteigenstromüberschuss. Die verfügbare Leistung wird anschließend modulierend und kaskadierend den Heizstäben 20a und/oder 20b und/oder 20c zugeleitet. Nachfolgend werden die Betriebszustände während des Tagesverlaufs beschrieben:
t₁: Mit Sonnenaufgang beginnt die Photovoltaikanlage 2a mit der Erzeugung elektrischer Energie. Die verfügbare Leistung wird in die Stromversorgungsschiene 6 eingespeist.
t₁ bis t₂: In diesem Zeitraum wird die Leistung durch den Verbraucherverbund 10 benötigt, was durch das Feld II angezeigt wird. Es steht kein Resteigenstromüberschuss zur Verfügung. Der gesamte Stromverbrauch von Verbraucherverbund 10 während des Tagesverlaufs ist als weiße Fläche umgeben mit einer punktgestrichenen Linie dargestellt.
t₂ bis t₃: Es steht zunehmend Resteigenstromüberschuss zur Verfügung. Dieser wird über die Kaskadenschalteinheit 31 modulierend dem Heizstab 20a im oberen Bereich des Wärmespeichers 21 zugeführt, was durch das mit waagerechten Strichen gekennzeichnete Feld III dargestellt ist.
t₃ bis t₄: Aufgrund eines hohen Leistungsbedarfs durch den Verbraucherverbund 10 steht in diesem Zeitraum kein Resteigenstromüberschuss zur Verfügung. Es findet keine Entnahme bzw. Auskopplung elektrischer Energie durch die Zuteilungseinrichtung 18 statt.
t₄ bis t₆: Der in diesem Zeitraum zunehmend verfügbare Resteigenstromüberschuss wird zum Volllastbetrieb des Heizstabs 20a im oberen Bereich sowie zum modulierenden Betrieb des Heizstabs 20b im mittleren Bereich des Wärmespeichers 21 den Heizstäben 20a und 20b zugeführt. Zum Zeitpunkt t₅ erhöht sich der Leistungsbedarf des Verbraucherverbunds 10 durch Einschalten zusätzlicher Verbraucher. Die Zuteilungseinrichtung 18 für elektrische Energie regelt entsprechend nach. Die Stromzufuhr an dem oberen Heizstab 20a ist wiederum durch das mit waagerechten Strichen gekennzeichnete Feld III dargestellt. Die Stromzufuhr an dem mittleren Heizstab 20b ist durch das mit diagonalen Strichen gekennzeichnete Feld IV dargestellt.
t₆ bis t₇: Aufgrund eines sehr hohen Leistungsbedarfs durch den Verbraucherverbund 10 in der Mittagszeit steht in diesem Zeitraum eingeschränkt Resteigenstromüberschuss zur Verfügung. Es kommt zur Abschaltung eines Heizstabs, in diesem Fall des nachrangig zu versorgenden Heizstabs 20b im mittleren Bereich des Wärmespeichers 21. Der obere Heizstab 20a wird modulierend betrieben, wie durch das Feld III dargestellt.
t₇ bis t₈: Innerhalb dieses Zeitraums wird die Zieltemperatur, zum Beispiel 65°C, im oberen Bereich des Wärmespeichers 21 erreicht. Der Heizstab 20a im oberen Bereich des Wärmespeichers 21 wird abgeschaltet, der Heizstab 20b im mittleren Bereich des Wasserspeichers 21 rückt in der Rangfolge der Steuerlogik auf den vordersten Platz. Er wird in diesem Zeitraum teilweise modulierend, teilweise in Volllast betrieben, wie durch das mit diagonalen Strichen gekennzeichnete Feld IV dargestellt.
t₈ bis t₉: Es steht ausreichend Resteigenstromüberschuss zur Verfügung, um den Heizstab 20b im mittleren Bereich des Wärmespeichers 21 in Volllast und den Heizstab 20c im unteren Bereich des Wärmespeichers 21 modulierend zu betreiben. Der Betrieb des unteren Heizstabs 20c ist durch das mit senkrechten Strichen gekennzeichnete Feld V dargestellt.
t₉ bis t₁₀: Der verfügbare Resteigenstromüberschuss in diesem Zeitraum reicht aus, um sowohl den mittleren Heizstab 20b als auch den unteren Heizstab 20c in Volllast zu betreiben. Der verbleibende Resteigenstromüberschuss wird in das öffentliche Stromnetz 7 eingespeist, was durch das mit waagerechten Wellen gekennzeichnete Feld VI dargestellt ist. Am Ende des Zeitraums führt das Erreichen der Zieltemperatur, zum Beispiel 65°C, im mittleren Bereich des Wärmespeichers 21 zum Abschalten des mittleren Heizstabs 20b, wodurch das Feld IV verschwindet.
t₁₀ bis t₁₁: Der verfügbare Resteigenstromüberschuss wird zum Volllastbetrieb des Heizstab 20c im unteren Bereich des Wärmespeichers 21 zugeleitet, wie durch das Feld V dargestellt. Der verbleibende Resteigenstromüberschuss wird ins öffentliche Stromnetz 7 eingespeist (siehe Feld VI). Am Ende des Zeitraums führt das Erreichen der Zieltemperatur, zum Beispiel 65°C, im unteren Bereich des Wärmespeichers 21 zum Abschalten des Heizstabs 20c.
t11 bis t₁₂: Der verfügbare Resteigenstromüberschuss in diesem Zeitraum wird in das öffentliche Stromnetz 7 eingespeist.

Allgemein: Bei Vorhandensein einer Speichereinrichtung 14 könnte verbleibender Resteigenstromüberschuss auch derselben zugeführt werden. Die Speichereinrichtung 14 kann jedoch auch in der strichpunktierten Linie, die den Strombedarf des Verbraucherverbunds 10 darstellt, berücksichtigt sein. Resteigenstromüberschuss wird aus wirtschaftlichen Erwägungen vorzugsweise in die Speichereinrichtung 14 eingespeist. Gegebenenfalls, insbesondere wenn die Temperatur des Wärmespeichermediums in dem Wärmespeicher 21 einen bestimmten Wert unterschreitet, kann es jedoch vorteilhaft sein, den Resteigenstromüberschuss der Heizeinrichtung 19, insbesondere dem oberen Heizstab 20a, zuzuführen. Gegebenenfalls ist sogar eine Entnahme von Strom aus der Speichereinrichtung 14 denkbar, um die Heizeinrichtung 19, insbesondere den oberen Heizstab 20a, zu betreiben, falls die Temperatur des Wärmespeichermediums in dem Wärmespeicher 21 einen bestimmten Wert unterschreitet. Dies stellt einen Fall dar, in dem die oben beschriebene Funktion der Rückspeisesperre 15 außer Kraft gesetzt werden kann. Selbstverständlich kann auch aus anderen Gründen auf die Rückspeisesperre 15 verzichtet oder deren Funktion abgewandelt werden.

In Fig. 3 ist die Stromerzeugung an einem Tag mit eingeschränkter Einstrahlung durch die Photovoltaikanlage 2a mittels der mit "I" bezeichneten Linie im Tagesverlauf dargestellt. Die erzeugte elektrische Energie wird vorrangig dem Verbraucherverbund 10 zugeführt. Dessen Bedarf an elektrischer Leistung variiert im Tagesverlauf sehr stark in Abhängigkeit der Zu- und Abschaltung der eingesetzten Verbraucher 11, 12, 13 und gegebenenfalls der Speichereinrichtung 14. In vielen Zeiträumen des Tagesverlaufs ergibt sich dennoch ein Resteigenstromüberschuss, welcher der Heizeinrichtung 19 mit, im vorliegenden Fall, dem Ziel der Brauch- bzw. Prozesswassererhitzung und/oder Heizungsunterstützung zugeführt wird, oder allgemein ausgedrückt mit dem Ziel der Beladung eines Wärmespeichers. Der Betrieb der Zuteilungseinrichtung 18 für elektrische Energie, mit der Heizstrommanagementeinheit 28 und der Heizeinrichtung 19, erfolgt dabei, wie oben beschrieben, im Regelfall modulierend und kaskadierend. Die Zuteilungseinrichtung 18 für elektrische Energie entnimmt der zentralen Stromversorgungsschiene 6 zum jeweiligen Zeitpunkt den verfügbaren Resteigenstromüberschuss. Die verfügbare Leistung wird anschließend modulierend und kaskadierend den Heizstäben 20a, 20b und/oder 20c zugeleitet. Im Gegensatz zu dem in Fig. 2 dargestellten vollsonnigen Sommertag kann mit dem verfügbaren Resteigenstromüberschuss lediglich die vollständige Beladung des oberen Bereichs des Wärmespeichers 21 sowie eine Teilbeladung des mittleren Bereichs des Wärmespeichers 21 erfolgen. Nachfolgend werden die Betriebszustände während des Tagesverlaufs beschrieben, wobei die Bedeutungen der Felder II, III und IV den oben erläuterten Bedeutungen entsprechen:
t₁: Mit Sonnenaufgang beginnt die Photovoltaikanlage 2a mit der Erzeugung elektrischer Energie. Die verfügbare Leistung wird in die Stromversorgungsschiene 6 eingespeist.
t₁ bis t₂: In diesem Zeitraum wird die Leistung durch den Verbraucherverbund 10 benötigt, was durch das Feld II angezeigt wird. Es steht kein Resteigenstromüberschuss zur Verfügung. Der gesamte Stromverbrauch von Verbraucherverbund 10 während des Tagesverlaufs ist wiederum als weiße Fläche umgeben mit einer punktgestrichenen Linie dargestellt.
t₂ bis t₃: Es steht zunehmend Resteigenstromüberschuss zur Verfügung. Dieser wird über die Kaskadenschalteinheit 31 modulierend dem Heizstab 20a im oberen Bereich des Wärmespeichers 21 zugeführt, wie durch Feld III angedeutet.
t₃ bis t₄: Aufgrund eines hohen Leistungsbedarfs durch den Verbraucherverbund 10 steht in diesem Zeitraum kein Resteigenstromüberschuss zur Verfügung. Es findet keine Auskopplung elektrischer Energie durch die Zuteilungseinrichtung 18 statt.
t₄ bis t₅: Der in diesem Zeitraum zunehmend, gegenüber Fig. 2 aber aufgrund verminderter Einstrahlung deutlich eingeschränkte, verfügbare Resteigenstromüberschuss wird zum Volllastbetrieb des Heizstabs 20a im oberen Bereich sowie zum modulierenden Betrieb des Heizstabs 20b im mittleren Bereich des Wärmespeichers 21 den Heizstäben 20a und 20b zugeführt. Dies ist durch die Felder III und IV dargestellt.
t₅ bis t₆: Der in diesem Zeitraum verfügbare Resteigenstromüberschuss reicht lediglich zum modulierenden Betrieb des Heizstabs 20a im oberen Bereich des Wärmespeichers 21.
t₇: Zu diesem Zeitpunkt wird die Zieltemperatur, zum Beispiel 65°C, im oberen Bereich des Wärmespeichers 21 erreicht, der obere Heizstab 20a wird abgeschaltet. Der mittlere Heizstab 20b rückt in der Regellogik an die erste Stelle und wird ab diesem Zeitpunkt modulierend betrieben. Dies ist durch das Feld IV dargestellt.
t₇ bis t₁₂: Es wird ein modulierender Betrieb des Heizstabs 20b im mittleren Bereich des Wärmespeichers 21 bis zum Tagesende durchgeführt, wie durch das Feld IV dargestellt. Ein Zuschalten des Heizstabs 20c erfolgt nicht, da zu keinem Zeitpunkt ausreichend Resteigenstromüberschuss verfügbar ist, um auch diesen Heizstab 20c zu betreiben.

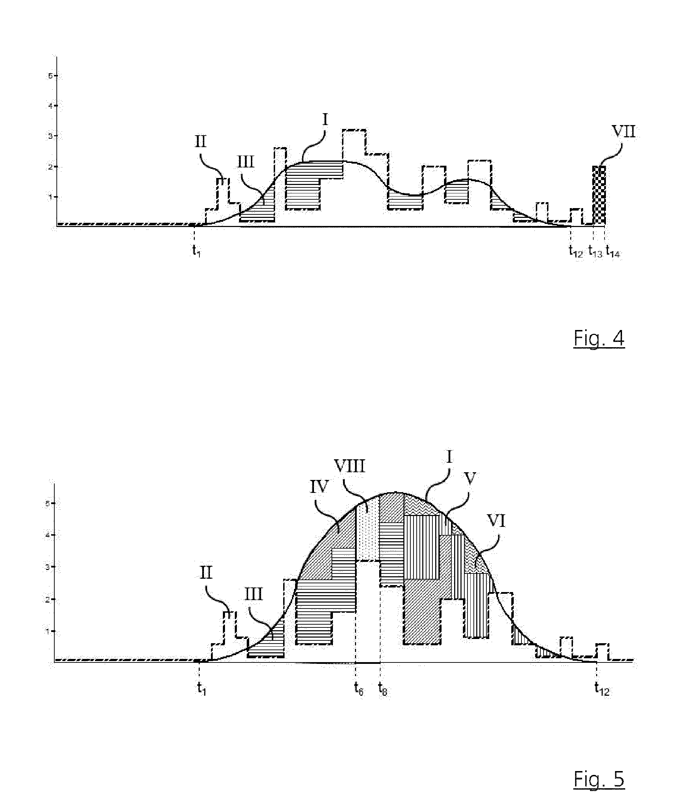

Fig. 4 zeigt den Regelbetrieb an einem einstrahlungsschwachen Tag mit Notbetrieb des Heizstabs 20a im oberen Bereich des Wärmespeichers 21 zur Gewährleistung einer Mindesttemperatur im oberen Speicherbereich. Der Notbetrieb ist bei Trink- und Brauchwassererwärmung erforderlich, um eine Verkeimung des Trink- und Brauchwassers unterbinden und die durch die Trinkwasserverordnung gesetzten Vorgaben erfüllen zu können. Nachfolgend werden die Betriebszustände während des Tagesverlaufs beschrieben, wobei wiederum die Bedeutungen der Linie I sowie der Felder II und III den unter Bezugnahme auf Fig. 2 beschriebenen Bedeutungen entsprechen:
t₁ bis t₁₂: Der im Tagesverlauf verfügbare Resteigenstromüberschuss wird modulierend dem Heizstab 20a im oberen Bereich des Wärmespeichers 21 zugeleitet. Da die Resteigenstromüberschuss-Energiemenge nicht ausreicht, den oberen Bereich des Wärmespeichers 21 vollständig bis auf die Zieltemperatur zu erhitzen, wird in der Nacht eine Nachheizung des oberen Bereiches über den Heizstab 20a mit Strom aus dem öffentlichen Stromnetz 7 durch die Regellogik der Mess-, Verarbeitungs- und Regeleinheit 29 veranlasst. Die Regellogik kann auch vorsehen, weitere Bereiche innerhalb des Wärmespeichers 21 auf eine Zieltemperatur mit Strom aus dem öffentlichen Stromnetz 7 nachzuheizen. Die Regellogik wird im Einzelfall so eingestellt, dass ein Nachheizen mit Strom aus dem öffentlichen Stromnetz 7 auf das erforderliche Maß begrenzt wird. Über einen längeren Zeitraum betrachtet ist es das Ziel, die Regellogik so einzustellen, dass einerseits die notwendige Betriebssicherheit des Systems gewährleistet ist, dass andererseits aber auch ein möglichst hoher Anteil an Eigenstromüberschuss-Nutzung erfolgt.
t₁₃ bis t₁₄: Die zum Nachheizen erforderliche Energiemenge, welche nach Tagesende aus dem öffentlichen Stromnetz 7 zu diesem Zweck entnommen wird, ist durch das mit Karos punktierte Feld VII dargestellt.
Fig. 5, die ansonsten Fig. 2 entspricht, zeigt, wie sich eine oben beschriebene Vorrangschaltung durch den Netzbetreiber oder andere Berechtigte auswirken könnte. Im Zeitraum t₆ bis t₈ wird die Zuteilungseinrichtung 18 für elektrische Energie, insbesondere die Stromversorgung der Heizeinheit 19, abgeschaltet, der Resteigenstromüberschuss wird uneingeschränkt in das öffentliche Stromnetz 7 eingespeist. Diese durch das punktierte Feld VIII dargestellte Schaltung kann in Spitzenlastzeiten sinnvoll eingesetzt werden. Voraussetzung für die Umsetzung der Vorrangschaltung durch den Netzbetreiber oder andere Berechtigte ist eine entsprechende Freigabe dieser Funktion sowie der möglichen Zugriffszeiten durch den Betreiber der Zuteilungseinrichtung 18 für elektrische Energie.

In nicht dargestellter Weise können Netzbetreiber oder andere Berechtigte mittels externer Steuerung über die Steuerleitung 35 durch Absenkung oder Erhöhung der Zufuhrleistung zur Heizeinrichtung 19 auch erreichen, dass ein definierter Teil der Eigenstromüberschussleistung ins öffentliche Netz gelenkt oder im umgekehrten Fall eine definierte, beispielsweise über einen bestimmten Zeitraum konstante Menge an Überschussstromleistung aus dem öffentlichen Netz in die Heizeinrichtung 19 gelenkt wird.

In weiterer nicht dargestellter Weise kann im Normalbetrieb ein Regelbetrieb an einem vollsonnigen Tag mit Einspeisebegrenzungs-Management durchgeführt werden. Nach dem EEG 2012 müssen Photovoltaikanlagen mit einem durch den Netzbetreiber regelbaren Netzmanagement ausgestattet sein. Alternativ können kleine Anlagen auf eine Einspeiseleistung von 70% der Generatorleistung begrenzt werden. Diese Begrenzung der Einspeiseleistung kann mit Hilfe der Regellogik der Zuteilungseinrichtung 18 für elektrische Energie ebenfalls gewährleistet werden.

Des Weiteren ist ein Winterbetrieb mit Einspeisebegrenzungs-Management möglich, bei dem alternativ zum Regelbetrieb die Zuteilungseinrichtung 18 für elektrische Energie in der Weise eingestellt werden kann, dass nur noch Funktionen wie beispielsweise Einspeisebegrenzungs-Management, Notbetrieb oder weitere Funktionen in Betrieb sind. Die Bereitstellung von Brauch- und Prozesswasser bzw. der Heizbetrieb, allgemein die Bereitstellung von Wärmeenergie, wird in diesem Fall durch eine mit nachwachsenden oder fossilen Brennstoffen betriebene Heizanlage gewährleistet.

## Patentansprüche

1. Verfahren zur Nutzung elektrischer Energie einer an ein Hausstromnetz (3) angeschlossenen Einrichtung (2) zur Erzeugung erneuerbarer elektrischer Energie, insbesondere einer Photovoltaikanlage (2a) und/oder einer Windkraftanlage, wobei zumindest ein Teil der von der Einrichtung (2) zur Erzeugung erneuerbarer elektrischer Energie erzeugte elektrische Energie als elektrischer Strom mehreren an dem Hausstromnetz (3) angeschlossenen Verbraucher (11,12,13,14) zugeführt und von den Verbrauchern (11,12,13,14) verbraucht wird, und wobei die von den Verbrauchern (11,12,13,14) nicht verbrauchte, überschüssige elektrische Energie einer Heizeinrichtung (19) zugeführt wird, um ein Wärmespeichermedium zu erwärmen,
dadurch h gekennzeichnet, dass
die Differenz zwischen der von der Einrichtung (2) zur Erzeugung erneuerbarer elektrischer Energie erzeugten elektrischen Energie und der von den an dem Hausstromnetz (3) angeschlossenen Verbrauchern (11,12,13,14) ohne die Heizeinrichtung (19) verbrauchten elektrischen Energie gemessen wird.

2. Verfahren nach Anspruch 1,
dadurch h **gekennzeichnet,** dass
die Differenz zwischen der von der Einrichtung (2) zur Erzeugung erneuerbarer elektrischer Energie erzeugten elektrischen Energie und der von den an dem Hausstromnetz (3) angeschlossenen Verbrauchern (11,12,13,14) ohne die Heizeinrichtung (19) verbrauchten elektrischen Energie kontinuierlich ermittelt wird.

3. Verfahren nach Anspruch 1 oder 2,
dadurch h gekennzeichnet, dass
einer der an dem Hausstromnetz (3) angeschlossenen Verbraucher (11,12,13,14) eine Speichereinrichtung (14) zum Speichern von elektrischer Energie ist, wobei die von den restlichen Verbrauchern (11,12,13) nicht verbrauchte elektrische Energie der Speichereinrichtung (14) zugeführt wird.

4. Verfahren nach Anspruch 1, 2 oder 3,
dadurch h gekennzeichnet, dass
die Heizeinrichtung (19) wenigstens einen in einen Wärmespeicher (21) ragenden, elektrischen Heizstab (20a,20b,20c) aufweist, und dass die elektrische Energie dem wenigstens einen elektrischen Heizstab (20a,20b,20c) modulierend zugeführt wird.

5. Verfahren nach Anspruch 4,
**dadurch gekennzeichnet, dass**
die Heizeinrichtung (19) wenigstens zwei bezüglich des Wärmespeichers (21) in Zonen angeordnete Heizstäbe (20a,20b,20c) aufweist, wobei die elektrische Energie bevorzugt einem der wenigstens zwei Heizstäbe (20a,20b,20c) zugeführt wird.

6. Verfahren nach einem der Ansprüche 1 bis 5,
**dadurch gekennzeichnet, dass**
die Temperatur des von der Heizeinrichtung (19) erwärmten Wärmespeichermediums gemessen wird, und dass die Zufuhr von elektrischer Energie zu der Heizeinrichtung (19) in Abhängigkeit von der gemessenen Temperatur des Wärmespeichermediums geregelt wird.

7. Verfahren nach einem der Ansprüche 1 bis 6,
**dadurch gekennzeichnet, dass**
zumindest ein Teil der Wärmeenergie des mittels der Heizeinrichtung (19) erwärmten Wärmespeichermediums einer Heizungsanlage zugeführt wird.

8. Verfahren nach einem der Ansprüche 1 bis 7,
**dadurch gekennzeichnet, dass**
die Zufuhr von überschüssiger elektrischer Energie aus der Einrichtung zur Erzeugung erneuerbarer elektrischer Energie (2) oder von elektrischer Energie aus dem öffentlichen Stromnetz (7) zur Erwärmung des Wärmespeichermediums durch den Netzbetreiber oder andere Berechtigte gesteuert wird.

9. Vorrichtung zur Durchführung des Verfahrens nach einem der Ansprüche 1 bis 8, mit einer Zuteilungseinrichtung (18) zur Zuteilung von elektrischer Energie zu einer Heizeinrichtung (19), wobei die Zuteilungseinrichtung (18) eine Heizstrommanagementeinheit (28) aufweist, die mit einer Messeinrichtung (16) zum Ermitteln des Verbrauchs an elektrischer Energie eines Verbraucherverbunds (10) ohne die Heizeinrichtung (19) und mit einer Messeinrichtung (17) zum Ermitteln der momentan erzeugten elektrischen Leistung einer Einrichtung (2) zur Erzeugung erneuerbarer elektrischer Energie verbunden ist, sodass die Heizstrommanagementeinheit (28) in der Lage ist, die Differenz zwischen der von der Einrichtung (2) zur Erzeugung erneuerbarer elektrischer Energie erzeugten elektrischen Energie und der von dem Verbraucherverbund (10) ohne die Heizeinrichtung (19) verbrauchten elektrischen Energie zu messen und die von dem Verbraucherverbund (10) nicht verbrauchte, überschüssige elektrische Energie der Heizeinrichtung (19) zuzuführen.

10. Vorrichtung nach Anspruch 9,
**dadurch gekennzeichnet, dass**
die Heizstrommanagementeinheit (28) eine Mess-, Verarbeitungs- und Regeleinheit (29) zur Messung und Verarbeitung von Signalen, eine Umsetzungseinheit (30) zur modulierenden Entnahme aus dem Hausstromnetz (3) und Bereitstellung elektrischer Energie und eine Kaskadenschalteinheit (31) aufweist.

11. Vorrichtung nach Anspruch 10,
**dadurch gekennzeichnet, dass**
die Heizeinrichtung (19) wenigstens zwei in Zonen angeordnete, in einen Wärmespeicher (21) ragende Heizstäbe (20a,20b,20c) aufweist, denen über die Kaskadenschalteinheit (31) elektrische Energie modulierend zuführbar ist.
